# EUROPEAN PATENT APPLICATION

(11) **EP 3 791 728 A1**
(43) Date of publication of application: **17.03.2021**
(21) Application number: 19901582.7
(22) Date of filing: 09.08.2019
(51) Int. Cl.: A23L 3/40, A23B 7/02

(54) **METHOD FOR PRODUCING DRIED EDIBLE PLANT COMPOSITION, DRYING METHOD, DRIED EDIBLE PLANT COMPOSITION AND FOOD AND BEVERAGE**

(30) Priority: 26.12.2018 JP 2018243734
(71) Applicant: Mizkan Holdings Co., Ltd., Handa-shi, Aichi 475-8585 (JP)
(72) Inventor: SAITO, Takeki, Handa-shi, Aichi 475-8585 (JP); KAKUDA, Hiroyuki, Handa-shi, Aichi 475-8585 (JP); KATSUKI, Mao, Handa-shi, Aichi 475-8585 (JP)
(74) Representative: Mewburn Ellis LLP
(86) International application number: PCT/JP2019/031588
(87) International publication number: WO 2020/136981

(57) **Abstract**

To provide a method for improving drying efficiency for producing a dried edible plant composition while keeping a characteristic and fresh flavor and color tone inherently possessed by a food product using an edible plant without requiring special equipment or conditions, and a dried edible plant composition having improved quality obtained by this method.

A method for producing a dried edible plant composition,
the dried edible plant composition comprising a non-edible part of an edible plant, in a dried state, in an amount of 3% by mass or more and 70% by mass or less based on the total mass of an edible part and the non-edible part,
the method comprising:
a step of crushing and mixing the edible part and the non-edible part; and
a step of drying until a moisture content reaches 20% by mass or less by forced-air drying at a temperature of 20°C or more and 80°C or less.

## Description

### TECHNICAL FIELD

The present invention relates to a method for producing a dried edible plant composition, a drying method and a dried edible plant composition and a food and drink.

### BACKGROUND ART

Edible plants generally have a high moisture content, and there has been a problem that, when subjected to a drying treatment, the characteristic and fresh flavor and color tone originally possessed by these plants are deteriorated or lost.

For this problem, there are methods such as freeze-drying, sun-drying, and ordinary-temperature ventilation-drying, which have the greatest impact on the quality of edible plants during drying. However, in the freeze-drying method, when processing low-priced foods, the equipment was expensive, the operation was also complicated, and the cost was high, which was inferior in versatility. In sun drying or ordinary temperature ventilation drying, although relatively low cost, there has been a problem that it takes a long time until the moisture content decreases, resulting in deterioration of quality over time.

Further, according to the means of heating and drying, although there is an effect that the drying time can be shortened, due to its heat load, the characteristic and fresh flavor and color tone originally possessed by the edible plant, it has been considered that a certain degree of deterioration is unavoidable.

For these problems, Patent Literature 1 discloses a plant drying apparatus and a method thereof which obtain an effect equivalent to natural drying in a short drying period. Patent Literature 2 discloses a method in which an object to be dried is moved in a drying tank, an object to be dried is floated while stirring, and air is supplied from below, and the object to be dried is repeatedly conveyed from the lower portion to the upper portion of the drying tank. Patent Literature 3 discloses a method in which a wood ceramic capable of emitting a wavelength of far-infrared rays in a region having good drying efficiency is efficiently dried by indirectly heating to emit far-infrared rays for drying of an object to be dried.

However, according to the method recited in Patent Literature 1, it is necessary to bury a part of the object to be dried in a space in which a powdery and granular desiccant is stored, and thereafter, there has been a problem that it is necessary to fractionate these in order to obtain an edible portion. In the methods recited in Patent Literatures 2 and 3, there was a problem that a special device was required.

As an example of a technique for improving the drying efficiency of a plant without the need of a material other than food or the need of a special device, Patent Literature 4 discloses a technique relating to a tea processed product containing a base food material and a coloring material using tea leaves as a raw material, wherein these are processed into an edible state, where the base food material is a vegetable-derived material, and the coloring material is a copper ion water in which the copper ion amount contained is grasped and a tea leaf are mixed and further heated and subjected to a copper chlorophyll treatment. Patent Literature 5 discloses a technique for making a mountain vegetable/vegetable or fruit into an amorphous thin plate-like granule having many gaps to which nutrients and flavors are attached by crushing and drying of freezing and stepwise regulating heating.

However, according to the method recited in Patent Literature 4, it is necessary to use a food material other than the main dried product, and there is possibility that the main dried product may affect the characteristic and fresh flavor inherently possessed by the main dried product. According to the method of Patent Literature 5, although a material other than an object to be dried is not required, a freezing operation for expanding an ice mass in a fiber material of an object to be dried to push and spread a fibrous interstitium to improve drying efficiency is essential, and there has been a problem that a characteristic and fresh flavor component and the like originally possessed by a food are lost due to the dissolution of ice and the occurrence of drip accompanying the heating and drying after freezing.

### CITATIONS

### PATENT LITERATURES

[Patent Literature 1] JP-B-6189563
[Patent Literature 2] WO 2012/011600
[Patent Literature 3] JP-A-2003-226577
[Patent Literature 4] JP-A-2010-284095
[Patent Literature 5] JP-A-2006-212022

### SUMMARY OF THE INVENTION

### PROBLEM

The present invention provides a method for improving drying efficiency for producing a dried edible plant composition while keeping a characteristic and fresh flavor and color tone inherently possessed by a food product using an edible plant without requiring special equipment or conditions, and a dried edible plant composition having improved quality obtained by this method.

### SOLUTION

In view of the above circumstances, the present inventors found that a dried plant composition having a fresh flavor and a color tone originally possessed by a food can be obtained simply by containing a specific amount of a non-edible portion in addition to an edible portion of an edible plant and pulverizing, mixing, and drying the non-edible portion under a certain condition, and has completed the present invention.

That is, the present invention provides the following [1] to [15].
[1] A method for producing a dried edible plant composition,
   the dried edible plant composition comprising a non-edible part of an edible plant, in a dried state, in an amount of 3% by mass or more and 70% by mass or less based on the total mass of an edible part and the non-edible part,
   the method comprising:
   a step of crushing and mixing the edible part and the non-edible part; and
   a step of drying until a moisture content reaches 20% by mass or less by forced-air drying at a temperature of 20°C or more and 80°C or less.
[2] The method for producing a dried edible plant composition according to [1], wherein any one of a conveyor type dryer, a flat dryer, or a box-type shelf dryer is used in the forced-air drying.
[3] The method for producing a dried edible plant composition according to [1] or [2], wherein the edible plant is placed on a mesh.
[4] The method for producing a dried edible plant composition according to any one of [1] to [3], wherein a crushing aspect of the edible part and the non-edible part of the edible plant is one or more selected from the group consisting of cutting into dices, chopped form, and minced form.
[5] The method for producing a dried edible plant composition according to any one of [1] to [4], wherein the edible part and the non-edible part of the edible plant are derived from the same kind of edible plant.
[6] The method for producing a dried edible plant composition according to any one of [1] to [5], wherein the edible part and the non-edible part of the edible plant are derived from the same individual edible plant.
[7] The method for producing a dried edible plant composition according to any one of [1] to [6], wherein the edible plant is one or more selected from the group consisting of cereals, potatoes, beans, nuts and seeds, vegetables, fruits, and mushrooms.
[8] The method for producing a dried edible plant composition according to any one of [1] to [7], wherein the edible plant is one or more selected from the group consisting of paprika, table beet, soybean, corn, carrot, pumpkin, pea, broad bean, sweet potato, broccoli, spinach, kale, and tomato.
[9] The method for producing a dried edible plant composition according to any one of [1] to [8], wherein the non-edible part of the edible plant is one or more selected from the group consisting of stem end, core or seed of paprika; root tip, skin or petiole of beet; pod of soybean (green soybean); bract, pistil or cob of corn; root tip or petiole base of carrot; pith or seed or both ends of pumpkin; pod of pea; seed skin or pod of broad bean; surface skin and both ends of sweet potato; leaf and stem of broccoli; plant foot of spinach; petiole base of kale; and stem end of tomato.
[10] The method for producing a dried edible plant composition according to any one of [1] to [9], wherein the dried edible plant composition consists only of the edible part of a plant and the non-edible part of a plant.
[11] The method according to any one of [1] to [10], wherein the dried edible plant composition is for human ingestion application.
[12] A method for drying an edible plant,
   the edible plant comprising a non-edible part of the edible plant, in a dried state, in an amount of 3% by mass or more and 70% by mass or less based on the total mass of an edible part and the non-edible part,
   the method comprising:
   crushing and mixing the edible part and the non-edible part; and
   drying until a moisture content reaches 20% by mass or less by forced-air drying at a temperature of 20°C or more and 80°C or less.
[13] A dried edible plant composition, wherein
   the dried edible plant composition comprises a non-edible part of an edible plant, in a dried state where the non-edible part is forced-air-dried at a temperature of 20°C or more and 80°C or less, in an amount of 3% by mass or more and 70% by mass or less based on the total mass of an edible part and the non-edible part, and
   a moisture content is 20% by mass or less.
[14] The dried edible plant composition according to [13], wherein the dried edible plant composition is a powder of the dried edible plant, and d50 after ultrasonication is 5 µm or more and 2,000 µm or less.
[15] The composition according to [13] or [14], wherein the dried edible plant composition is for human ingestion application.
[16] A food and beverage comprising the dried edible plant composition according to any one of [13] to [15].

### ADVANTAGEOUS EFFECT OF THE INVENTION

The present invention provides a method for improving drying efficiency for producing a dried edible plant composition while maintaining a characteristic and fresh flavor and color tone inherently possessed by a food using an edible plant which is an object to be dried without requiring special equipment or conditions, and a dried edible plant composition having improved quality obtained by this method.

### DETAILED DESCRIPTION OF THE INVENTION

Hereinafter, examples of the present invention embodiments will be described, but the present invention is not limited to these aspects, and can be implemented with any modifications without departing from the gist thereof.

The present invention relates to a method for producing a dried edible plant composition containing an edible part and a non-edible part of an edible plant, the method comprising crushing and mixing the edible part and the non-edible part; adjusting the proportion of the non-edible part based on the total mass of the edible part and the non-edible part to 3% by mass or more and 70% by mass or less, in a dried state; and then drying until the moisture content of the mixture reaches 20% by mass or less by forced-air drying at a temperature of 20°C or more and 80°C or less. The 'dried' state in the present invention refers to a state where the moisture content is 20% by mass or less, and the moisture content is more preferably 10% by mass or less, even more preferably 8% by mass or less, and even more preferably 7% by mass or less. In addition, the water activity value is preferably 0.85 or less, even more preferably 0.80 or less, and most preferably 0.75 or less.

The edible plant in the present invention refers to a plant containing the edible part and/or the non-edible part thereof which are used for human consumption. The edible plant in the present invention is not limited at all as long as it is used for human consumption, and examples thereof include vegetables, potatoes, mushrooms, fruits, spices, algae, cereals, nuts and seeds, and beans. The present invention is more useful for vegetables, potatoes, mushrooms, fruits, algae, cereals, nuts and seeds, and beans, each of which contain a large amount of moisture (approximately the moisture content is 50% by mass or more, in particular, 70% by mass or more), and the most useful for vegetables, potatoes, mushrooms, fruits, algae, cereals, and beans. Specifically, it can be understood which food product corresponds to the edible plant with reference to, for example, cereals, potatoes, beans, nuts and seeds, vegetables, fruits, mushrooms, algae, and spices among classifications described in "the Standard Tables of Food Composition in Japan 2015 (Seventh Revised Edition) Supplementary edition 2018" (the food composition table defined by the Ministry of Health, Labour and Welfare; see in particular, Table 1 on page 236). These foodstuffs may be used alone or two or more in any combination. Since it is difficult to powder the edible plant containing a higher fat/oil, the fat/oil content in the edible plant in the dried state is preferably 30% by mass or less, and in particular, vegetables, fruits, cereals, and beans are more preferred. These foodstuffs may be used as they are, or may be used after being subjected to various treatments (for example, drying, heating, removal of harshness, peeling, removal of seeds, afterripening, salting, and processing of fruit peels). The classification of the foodstuff can be determined from the state of the whole plant combined with the non-edible part.

Examples of vegetables include, but are not limited to, Japanese radish, carrot, rutabaga, parsnip, turnip, black salsify, east Indian lotus, beet (suitably table beet (beetroot): a breed improved to use the root of beet for food), arrowhead, eschalot, garlic, rakkyo, lily, kale, onion, asparagus, udo, cabbage, head lettuce, spinach, heading Chinese cabbage, turnip rape, spinach mustard, green bok choy, Chinese chive, Welsh onions, nozawana, Japanese butterbur, chard (fudanso, Swiss chard), mizuna, tomato, eggplant, pumpkin, sweet pepper, cucumber, Japanese ginger, cauliflower, broccoli, edible chrysanthemum, bitter melon, okra, globe artichoke, zucchini, sugar beet, tigernut, ginger, perilla, wasabi, paprika, herbs (watercress, coriander, water morning glory, celery, tarragon, chives, chervil, sage, thyme, laurel, parsley, mustard greens (karashina), Japanese wormwood, basil, oregano, rosemary, peppermint, savory, lemongrass, dill, wasabi leaf, Japanese pepper leaf, and stevia), bracken fern, Japanese royal fern, and moso bamboo. Above all, carrot, pumpkin, tomato, paprika, cabbage, beet (suitably table beet (beetroot)), onion, broccoli, asparagus, spinach, kale, and the like are preferred, and carrot, pumpkin, paprika, beet (suitably table beet (beetroot)), broccoli, spinach, kale, tomato, and the like are particularly preferred.

Examples of potatoes include, but are not limited to, sweet potato, cassava, yacon, taro, satoimo, konjac, tashiroimo (Polynesian arrowroot), potato, purple sweet potato, Jerusalem-artichoke, katakuri, yam, Japanese yam, Chinese yam, and kudzu. Above all, purple sweet potato, sweet potato, and the like are particularly preferred.

Examples of mushrooms include, but are not limited to, shiitake mushroom, matsutake, Jew's ear, maitake, sarunokoshikake, oyster mushroom, King oyster mushroom, enokitake, shimeji, naratake, mushroom, nameko, Jersey cow mushroom, hatsutake, and chichitake.

Examples of fruits include, but are not limited to, Chinese quince, Chinese white pear (white pear, Chinese pear), nashi pear, common quince, medlar, juneberry, shipova, apple, American cherry (black cherry, dark cherry), apricot, Mume, cherry (sweet cherry), sour cherry, blackthorn, Japanese plum, peach, ginkgo, chestnuts, akebia, fig, Japanese persimmon, cassis (blackcurrant), bramble, kiwifruit (kiwi), gummy, mulberry (dodome), cranberry (American cranberry), cowberry (iwamomo, hamanashi, okamaringo), pomegranate, Hardy kiwi (shirakuchizuru, kokuwa), sea buckthorn (saji, hippophae, seaberries), gooseberry, jujube, Japanese bush cherry (koume, ikuri), haskap (honeyberry), bilberry, redcurrant, grape, blackberry, blueberry, pawpaw, matsubusa, raspberry, downy cherry, mandarin orange, kumquat, trifoliate orange, olive, loquat, red bayberry, monkfruit, tropical fruits (tropical fruits such as mango, mangosteen, papaya, cherimoya, atemoya, banana, durian, carambola, guava, pineapple, acerola, passion fruit, pitaya, lychee, and canistel), strawberry, watermelon, melon, avocado, miracle fruit, orange, lemon, prune, yuzu, sudachi, grapefruit, bitter orange, and flat lemon.

Examples of algae include, but are not limited to, macroalgae such as kombu, wakame, nori, green laver, and tengusa; and microalgae such as green algae, red algae, blue-green algae, dinoflagellate, and Euglena. Specific examples thereof include, sea lettuce, green laver, perforated sea lettuce, sea grapes (green caviar), katashiokusa, green caviar, kuromiru, tamamiru, torinoashi (yuikiri), hitoegusa, hiraaonori, fusaiwazuta, grass kelp, akamoku, amijigusa, arame, antokume, ishige, ichimegasa, iroro, iwahige, umitoranoo, sea fan, oobamoku, Okinawa-mozuku, kaigaraamanori, kagomenori, kajime (arame), kayamonori, gibasa (akamoku, ginbaso, jinbaso, jibasa), sanadagusa, shiwanokawa, shiwayahazu, seiyo habanori, tsuruarame, nanori (kayamonori), nebarimo, nokogirimoku, habanori, hijiki, hirome, fukuronori, futomozuku, hondawara, ma-kombu, matsumo, mugiwaranori (kayamonori), muchimo, moduku (mozuku), yuna, wakame, Asakusa nori, ibotsunomata, ushikenori, usukawakaninote, ezotsunomata (kurohaginnanso), oobusa, ogonori, okitsunori, obakusa, katanori, kabanori, kamogashiranori, kijinoo, kurohaginnanso (ezotsunomata), sakuranori, shiramo, tanbanori, tsunomata, tsurushiramo, tsurutsuru, tosakanori, tosakamatsu, nogenori (fukuro funori), nori (susabinori), hanafunori, harigane, hiragaragara, hirakusa, hiramukade, pirihiba, fukuro funori, fushitsunagi, makusa, maruba amanori, mitsudesozo, euglena, chlorella, mirin, mukadenori, yuikiri, yukari, and tengusa. Among these algae, some of microalgae such as chlorella have a significantly strong cell wall, and thus, it is preferred to utilize microalgae after being subjected to a pretreatment to disrupt the cell wall, or use algae other than microalgae.

Examples of nuts and seeds include, but are not limited to, almond, cashew, pecan nut, macadamia nut, pistachio, hazel nut, coconut, pine nut, sunflower seed, pumpkin seed, watermelon seed, chinquapin, walnut, chestnuts, ginkgo, sesame, and Brazil nut. Above all, almond, cashew, macadamia nut, pistachio, hazel nut, coconut, and the like are preferred.

Examples of beans include, but are not limited to, common bean, kidney bean, red common bean, white common bean, black bean, pinto bean, toramame, lima bean, scarlet runner bean, peas (for example, yellow pea, white pea, green pea, marrowfat pea, and in particular, green pea which is an unripe seed obtained by harvesting the seed with pods in an unripe state and whose bean exhibits a green appearance), pigeon pea, mung bean, cowpea, adzuki bean, broad bean, soybean (in particular, green soybean), chickpea, lentil (Lens esculenta), lentil (Lens culinaris), lentil, peanut, lupin bean, grass pea, locust bean (carob), petai bean, African locust bean, coffee bean, cocoa bean, and Mexican jumping bean. Some of the foodstuffs in which the edible part (for example, green soybean and green pea) are handled as a vegetable can be determined from the state of the whole plant (for example, soybean and pea) combined with the non-edible part (for example, pod) whether the foodstuff belongs to beans. Above all, pea (in particular, green pea which is an unripe seed obtained by harvesting the seed with pods in an unripe state and whose bean exhibits a green appearance), soybean (in particular, green soybean which is an unripe seed obtained by harvesting the soybean with pods in an unripe state and whose bean exhibits a green appearance), broad bean, and the like are preferred.

Examples of cereals include, but are not limited to, corn (in particular, sweetcorn is preferred), rice, common wheat, barley, sorghum, common oat, triticale, rye, buckwheat, fonio, quinoa, Japanese barnyard millet, foxtail millet, proso millet, giant corn, sugar cane, and amaranth. Above all, corn (in particular, sweetcorn is preferred), giant corn, and the like are preferred.

Examples of spices include, but are not limited to, white pepper, red pepper, chili, horseradish, mustard, poppy seed, nutmeg, cinnamon, cardamon, cumin, saffron, allspice, clove, sansho, orange peel, fennel, licorice, fenugreek, dill seed, Chinese pepper, long pepper, and olive fruit.

In the present invention, the "non-edible part" of the edible plant represents the part of the edible plant which is usually not suitable for drinking and eating or the part which is to be disposed of in usual dietary habits, and the "edible part" represents the part excluding the disposal site (non-edible part) from the whole edible plant. Particularly in the case of the edible plant comprising a thick dietary fiber layer, a trichome, or the like, the part comprising the thick dietary fiber layer, the trichome, or the like conventionally has many parts that are not available for eating and to be disposed of due to bad feeding performance and bad compatibility with other food products. In the present invention, the non-edible part comprising such a thick dietary fiber layer, a trichome, or the like can be suitably used.

In the edible plant used for the present invention, the edible part and the non-edible part thereof may be derived from different kinds of edible plants, but it is preferred to contain the edible part and the non-edible part derived from the same kind of edible plant from the viewpoint the uniformity of flavor. Further, it is preferred to contain the edible part and the non-edible part derived from the same edible plant individual. That is, such an edible plant can be effectively utilized by using a part or the whole of the edible part and a part or the whole of the non-edible part each derived from the same edible plant individual.

Examples of the non-edible part of the edible plant include skin, seed, core, and draff of the various edible plants described above. Above all, since rich nutrients remain in the skin, seed, core, draff, and the like of, without limitation, corn (for example, sweetcorn), paprika, pumpkin, table beet, broccoli, spinach, carrot, kale, soybean (in particular, green soybean), pea, broad bean, sweet potato, tomato, rice, onion, cabbage, apple, grape, sugar cane, citrus fruits (for example, satsuma mandarin and yuzu), they can be suitably used in the present invention. Specific examples of the non-edible part of the edible plant include, but are not limited to, bract or pistil or cob of corn (for example, sweetcorn); stem end or core or seed of paprika; pith or seed or both ends of pumpkin; root tip or skin or petiole of table beet; leaf and stem of broccoli; plant foot of spinach; root tip or petiole base of carrot; petiole base of kale; pod of soybean (green soybean); pod of pea; seed skin or pod of broad bean; surface skin and both ends of sweet potato; stem end of tomato; rice hull of rice (unhulled rice); skin (protective leaf), bottom part, or head part of onion; core of cabbage; core of apple; fruit peel and seed of grape; draff of sugar cane; and peel, seed, and pith of citrus fruits (for example, satsuma mandarin and yuzu). One not containing any components harmful to the human body in a degree that affects the human body is preferably used.

The site or the ratio of the non-edible part in the edible plant used in the present invention could be of course understood by those skilled in the art of handling the food product or the processed product of the food product. For example, the "disposal site" and the "disposal ratio" described in the Standard Tables of Food Composition in Japan 2015 (Seventh Revised Edition) can be referenced and respectively treated as the site and the ratio of the non-edible part. The following Table 1 lists examples of the edible plant and the "disposal site" and the "disposal ratio" (that is, the site and the ratio of the non-edible part) described in the Standard Tables of Food Composition in Japan 2015 (Seventh Revised Edition) with respect to the edible plant.

**[Table 1]**

| Edible plant | Site of non-edible part (disposal site) | Ratio of non-edible part (disposal ratio) |
|---|---|---|
| Vegetables/green soybean/raw | Pod | 45% |
| Vegetables/(corns)/sweetcorn/immature seed, raw | Bract, pistil, and cob | 50% |
| Vegetables/(pumpkins and squashes)/Japanese pumpkin /fruit, raw | Pith, seed, and both ends | 9% |
| Vegetables/(sweet peppers)/red sweet pepper/fruit, raw (paprika) | Stem end, core, and seed | 10% |
| Vegetables/table beet/root, raw | Root tip, skin, and petiole | 10% |
| Vegetables/broccoli/inflorescence, raw | Leaf and stem | 50% |
| Vegetables/(tomatoes)/tomato/fruit, raw | Stem end | 3% |
| Vegetables/(cabbages)/cabbage/head-forming leaf, raw | Core | 15% |
| Vegetables/spinach/leaf, raw | Plant foot | 10% |
| Vegetables/kale/leaf, raw | Petiole base | 3% |
| Vegetables/(peas)/green pea/raw | Pod | 55% |
| Vegetables/broad bean/immature bean/raw | Seed coat, pod | 80% |
| Vegetables/(carrots)/root, with skin, raw | Root tip and petiole base | 3% |
| Potatoes and starches/sweet potato/ tuberous root, raw | Surface skin and both ends | 10% |

Although the edible plant in the present invention contains the edible part and the non-edible part thereof, the lower limit of the proportion of the non-edible part based on the total mass of the edible part and the non-edible part in the dried state is only required to be 3% by mass or more, from the viewpoint of sufficiently exerting an effect of improving the drying efficiency. The lower limit thereof is preferably, for example, 5% by mass or more, and 9% by mass or more, depending on the kind of the edible plant. On the other hand, the upper limit thereof is only required to be 70% by mass or less, from the viewpoint of suppressing an unpleasant drying smell (old stink and pulp smell), but it may be, for example, 60% by mass or less, or for example, 50% by mass or less, depending on the kind of the edible plant, from the viewpoint of feeding performance, flavor, and the like.

In the present invention, when the non-edible part within the range defined as described above is mixed, regardless of the kind of the edible plant, the drying speed becomes higher, the time until the moisture content reaches 20% by mass is shortened, and the drying efficiency is improved, as compared with those in the drying treatment of only the edible part. In accordance with that, an effect of improving a characteristic and fresh flavor or color tone which are inherent in the edible plant can be exerted. In particular, it is preferred that the edible part and the non-edible part of the edible plant be derived from the same kind of edible plant because the flavor of the edible part is more appealing, and it is most preferred that the edible part and the non-edible part of the edible plant be derived from the same individual edible plant. When the mixing proportion of the non-edible part is at a certain level or higher, the drying efficiency is improved. The reason seems to come from the fact that the shape of fragments containing a large amount of hard dietary fiber, which are contained in the non-edible part of the edible plant, is warped or rounded due to drying to generates pores in a material to be dried, which results in the improvement in ventilation efficiency of the whole material to be dried. On the other hand, when the amount of fragments containing a large amount of hard dietary fiber is too large, the unpleasant drying smell (old stink and pulp smell) is strongly expressed due to drying, so that the flavor of the whole material to be dried is poor.

The present invention also comprises food and beverage containing the dried edible plant composition of the present invention. That is, owing to the effect of the dried edible plant composition of the present invention, the characteristic and fresh flavor or color tone which are inherent in the edible plant can be imparted to the food and beverage to be added, in the food and beverage containing the dried edible plant composition, and the flavor of the food and beverage can be improved. The amount of the dried edible plant composition of the present invention blended into the food and beverage to be added is not particularly limited and only required to be appropriately adjusted so that the flavor of the edible plant as the raw material can be imparted to the food and beverage. The proportion of the dried edible plant composition to the total amount of the food and beverage is preferably 10% by mass or more, more preferably 20% by mass or more, more preferably 30% by mass or more, and particularly preferably 40% by mass or more, in terms of the proportion of dry weight. The upper limit is preferably 100% by mass or less.

The food and beverage of the present invention are not limited at all and examples thereof include a liquid food product such as beverage (for example, soup and smoothie), liquid or semi-solid or solid food and beverage such as seasonings (for example, mayonnaise, dressing, butter, and margarine), a semi-solid or solid food product such as confectioneries (for example, granola, stick, cracker, caramel, gummy, and chips), and a powder food product such as dry seasonings.

Some bacteria having the ability to form spores forms spores in an environment unsuitable for the growth such as low moisture content and high temperature, acquires strong heat resistance and remains in the food product, so that the food product has a quality unsuitable for human ingestion, and thus these bacteria are an index of quality deterioration, and the like. It is known that typically these bacteria having the ability to form spores are likely to be entered from the soil, and thus when a site having many opportunities to come in contact with the soil (the non-edible part such as the skin or pod of a food product or the edible part exposed to the outside) is dried, the drying method of the present invention is preferably used because the shortening of the drying time can shorten the time exposed to the environment such as low moisture content and high temperature in which spores are likely to be formed, so that the food product has a quality suitable for human ingestion. On the other hand, since drying for a long period of time is required to suppress the number of viable cells, drying is performed for a long period of time for feedstuffs and the like, resulting in a state where spore bacteria are likely to increase their number, as mentioned above. The dried edible plant composition of the present invention is for human ingestion application and, unlike the feedstuff, can be adjusted to have a quality in which the number of viable cells is also suppressed while suppressing the number of spore bacteria, in order to obtain a quality suitable for eating by human beings. Specifically, the number of viable cells after drying is preferably adjusted to be 10⁶ cells/g or less because the composition can have a quality suitable for human ingestion, and even more preferably adjusted to be 10⁵ cells /g or less.

Furthermore, in order to obtain a quality suitable for eating by human beings, quality control which is usually not required for feedstuffs for livestock is required. Specifically, the content of harmful substances such as a light metal (arsenic) and a heavy metal (such as lead, cadmium, copper, zinc, and tin) which are derived from the soil attached to the non-edible part is required to be a certain level or less (for example, the content of cadmium is 0.4 ppm or less). Thus, the dried edible plant of the present invention is required to be thoroughly cleaned prior to the drying process.

In the drying treatment of the edible plant, it is preferred that the surface of the material to be dried is subjected to the atmosphere as much as possible. As one example, when the material to be dried is placed on a shelf of a forced-air dryer, a conveyor of a forced-air conveyor dryer, or the bottom of a flat dryer, the effect of improving the drying efficiency of the edible plant of the present invention and in accordance with that, the effect of improving the characteristic and fresh flavor or color tone which are inherent in the edible plant can be more enhanced by laying a plate or a cloth (mesh) having porosity such as a mesh plate and a wire mesh on a shelf or a tray to be placed thereon, or on a conveyor or on the bottom of the flat dryer. These effects are not limited to the above method, and any means can be appropriately selected as long as it is a means for exposing the surface of the material to be dried to the atmosphere as much as possible. The size of the mesh can be appropriately adjusted as long as the material to be dried does not fall down, but the opening is preferably 10 mm or less, even more preferably 6 mm or less, even more preferably 4 mm or less, even more preferably 2 mm or less, and even more preferably 1 mm or less, in view of the drying efficiency.

In the present invention, with regard to the proportion of the non-edible part based on the total mass of the edible part and the non-edible part, the edible part and the non-edible part may be separately crushed and then the mixing proportion thereof may be adjusted, or the proportion of the edible part and the non-edible part may be adjusted before they are simultaneously crushed. From the viewpoint of homogeneous mixing of the edible part and the non-edible part, it is preferred that the crushing be performed after the edible part and the non-edible part are mixed together. From the viewpoint of easiness of the crushing operation, it is more preferred that the entire edible plant be crushed without separating the edible part and the non-edible part. In a utilization aspect as a drying method for the edible part of the edible plant of the present invention (a drying treatment in an aspect for collecting the edible part of the edible plant from the mixture of the edible part and the non-edible part, that is, an aspect for collecting the edible part of the edible plant having an improved characteristic and fresh flavor or color tone which are inherent in the edible plant from the mixture of the edible part and the non-edible part after drying), a crushing aspect is only required to be appropriately adjusted in advance to a degree and an aspect which facilitate the separation between the edible part and the non-edible part such as cutting.

In the present invention, crushing is an operation to improve the drying efficiency, and if the surface area of the edible plant can be increased, its aspect is not limited at all. Specific examples thereof include cutting, breaking, shredding, and grinding such as sliced form, cutting into dices, chopped form, and minced form. An aspect of cutting into dices, chopped form, or minced form is more preferred from the viewpoint of the mechanism of the effect of improving the drying efficiency, and cutting into dices is more preferred than the sliced form, the minced form is more preferred than cutting into dices because the effect of the present invention can be more strongly exerted. The crushing aspect such as cutting into dices or sliced form facilitates the separation between the edible part and the non-edible part of the edible plant after the drying treatment and can be exploited as a method for improving the drying efficiency with the edible part quality; therefore, it is industrially preferred. The aspect after crushing is only required to be a state where the surface area of the edible plant is increased and the edible part and the non-edible part of the edible plant can be uniformly mixed. Specifically, the edible plant is crushed such that an average distance between a cutting surface of a crushed edible plant and an opposing cutting surface may be preferably 5 cm or less, more preferably 3 cm or less, more preferably 2 cm or less, and most preferably 1 cm or less. However, if the edible plant is shredded to a state where syneresis clearly occurs, a component derived from the characteristic and fresh flavor or color tone which are inherent in the edible plant flows out with moisture, and thus, the degree or the aspect of crushing is only required to be appropriately adjusted so as to obtain a size and a crushing aspect with which no syneresis occurs. Specifically, the average distance between the cutting surface of the crushed edible plant and the opposing cutting surface is only required to be 100 µm or more.

The means for crushing treatment used in the present invention is not particularly limited. The temperature during crushing is also not limited and any of high-temperature crushing, normal-temperature crushing, and low-temperature crushing may be used. The pressure during the crushing treatment is also not limited and any of high pressure-crushing, normal-pressure crushing, and low-pressure crushing may be used. However, a means which allows to treat with high shear at a lower temperature in a short time is preferred, from the viewpoint of retaining the characteristic and fresh flavor or color tone which are inherent in the edible plant in the present invention. Examples of an apparatus for such a crushing treatment include instruments such as a cutter, a blender, a mixer, a mill, a kneader, a grinder, a pulverizer, and an attritor, but any of which may be used, and a plurality of them may be used in combination.

In the present invention, the edible plant which is the material to be dried is crushed and adjusted such that the blending ratio of the edible part to the non-edible part may be within a certain range, and mixed such that the edible part and the non-edible part can be homogeneously dispersed. Thereafter, the edible plant containing the edible part and the non-edible part is subjected to a drying treatment by forced-air drying.

The drying treatment method by forced-air drying used at this time is not particularly limited, and examples thereof include forced-air drying methods typically used in the drying of a food product, for example, a blow-drying method such as high-temperature drying, fluid bed drying, spray drying, drum drying, and low-temperature drying, or a drying method which moves the material to be dried. Above all, a drying method in which the material to be dried is allowed to stand and the air is forced thereover is preferred, from the viewpoint of not impairing the form of the foodstuff. In addition, a system of drying in a drying cabinet having a certain sealing performance is further preferred from the viewpoint of energy efficiency. The forced-air dryer is not limited at all, as long as it is a typical forced-air dryer, but it is effective and particularly preferred to use a parallel-flow dryer in which air is sent in parallel to the material to be dried, a box-type shelf dryer such as a system in which air is blown or sucked vertically from the top surface or the bottom surface of a drier, a conveyor type dryer, a flat dryer, or the like. As used herein, the "forced-air" state of the forced-air drying refers to conditions where the air volume is 180 m³/h or more (the multiplication of a passing air rate of 0.05 (m/s) and a passing area 1 (m²)). Examples of preferred forced-air conditions during drying include, but are not limited to, continuously sending the air whose temperature is controlled by a heater or a cooler directly to the material to be dried in a drying cabinet using a blower fan with a static pressure of usually from about 30 to 50 mm water column or more, at an air volume of 180 m³/h or more, and within a range that the material to be dried is not scattered (the range can be appropriately adjusted depending on the kind and the form of the material to be dried), or continuously blowing or drawing air from a vent hole on a conveyor or the bottom surface of a dryer directly to the material to be dried.

Specific examples of the forced-air drying include low-temperature forced-air drying, normal-temperature forced-air drying, high-temperature forced-air drying, fluid bed drying, and drum drying. Temperature-controlled forced-air drying is preferred in view that the degree of the change in the characteristic and fresh flavor or color tone which are inherent in the edible plant is small and that the fragrance other than the food product (such as a burning smell) can be controlled. For a specific ambient temperature in a drying cabinet (which refers to an average ambient temperature during the drying period), the lower limit is only required to be 20°C or more, and above all preferably 30°C or more. On the other hand, the upper limit is only required to be 80°C or less, above all preferably 70°C or less, and even more preferably 60°C or less. For the time required for drying, the degree or the aspect of crushing is only required to be appropriately adjusted such that the degree of the change in the characteristic and fresh flavor or color tone which are inherent in the edible plant is smaller.

In the present invention, the moisture content of the edible plant composition after drying treatment may usually be 20% by mass or less, but is preferably 15% by mass or less, and furthermore, more preferably 10% by mass or less, even more preferably 8% by mass or less, and even more preferably 7% by mass or less, from the viewpoint of preservability. A method typically used to measure components of a food product can be used to measure the moisture content in the present invention, and for example, a measuring method in accordance with the method described in the Standard Tables of Food Composition in Japan can be used. Specifically, a method for subjecting the edible plant to a reduced-pressure heat-drying method can be used. The water activity value is preferably 0.85 or less, even more preferably 0.80 or less, and most preferably 0.75 or less. For the measurement of the water activity value in the present invention, a commercially available water activity measuring apparatus can be used.

The present invention also relates to a method for drying the edible plant, the edible plant comprising the non-edible part of the edible plant, in a dried state, in an amount of 3% by mass or more and 70% by mass or less based on the total mass of the edible part and the non-edible part, the method comprising crushing and mixing the edible part and the non-edible part, and drying until the moisture content reaches 20% by mass or less by forced-air drying at a temperature of 20°C or more and 80°C or less.

The above method of producing a dried edible plant composition is performed by mixing the non-edible part of the edible plant with the edible part in a certain ratio, and when a dry-treated material of the non-edible part is not needed, the dry-treated material can be eliminated after the drying treatment. When this aspect is exploited, the degree or the aspect of crushing is only required to be appropriately adjusted such that the non-edible part can be eliminated after the drying treatment.

That is, in this aspect, the method for drying according to the present invention can be considered as an efficient drying treatment method of the edible part of the edible plant.

During the aforementioned crushing treatment and the drying treatment, one or two or more seasonings, food additives, and the like other than the edible plant as the material to be dried may be optionally contained within a range not inhibiting the effect of the present invention (the effect of improving the drying efficiency of the edible plant, and in accordance with that, the effect of improving the characteristic and fresh flavor or color tone which are inherent in the edible plant). Examples of seasonings, food additives, and the like include soy sauce, miso paste, alcohols, sugars (for example, glucose, sucrose, fructose, glucofructose syrup, and fructoglucose syrup), sugar alcohols (for example, xylitol, erythritol, and maltitol), artificial sweeteners (for example, sucralose, aspartame, saccharin, and acesulfame K), minerals (for example, calcium, potassium, sodium, iron, zinc, magnesium, and salts thereof), fragrance, seasoning (such as amino acid), extracts, pH adjusters (for example, sodium hydroxide, potassium hydrate, lactic acid, citric acid, tartaric acid, malic acid, and acetic acid), cyclodextrin, antioxidants (for example, vitamin E, vitamin C, tea extract, green coffee bean extract, chlorogenic acid, spice extract, coffeic acid, rosemary extract, vitamin C palmitate, rutin, quercetin, bayberry extract, and sesame extract), emulsifiers (for example, glycerin fatty acid ester, acetic acid monoglyceride, lactic acid monoglyceride, citric acid monoglyceride, diacetyl tartaric acid monoglyceride, succinic acid monoglyceride, polyglycerin fatty acid ester, polyglycerin condensed ricinoleate, Quillaja extract, soybean saponin, tea seed saponin, and sucrose fatty acid ester), colorants, and thickening stabilizers.

However, it is preferred not to contain any so-called emulsifier and/or colorant and/or thickening stabilizer (for example, those described as "colorant", "thickening stabilizer", and "emulsifier" in "Table of food additive names for indication" of Food Additives Indication Pocket Book (2011)), from the viewpoint of a recent increase in nature-oriented trend. Above all, it is especially desired not to contain any food additive (for example, those using substances described in "Table of food additive names for indication" of Food Additives Indication Pocket Book (2011) for food additive applications).

Further, the present invention also comprises the dried edible plant composition, wherein the dried edible plant composition comprises the non-edible part of the edible plant, in a dried state in which the non-edible part is forced-air-dried at a temperature of 20°C or more and 80°C or less, in an amount of 3% by mass or more and 70% by mass or less based on the total mass of the edible part and the non-edible part, and the moisture content is 20% by mass or less.

The dried edible plant composition of the present invention is based on the effect of the production method of the present invention and the particle size or the form thereof is not defined, but when used for edible purposes, a hard texture due to the thick dietary fiber layer or a scratchy texture due to the trichome, which are one of the factors inhibiting edibility (the reason why the non-edible part is the non-edible part), remains after drying. Therefore, when the dried edible plant composition of the present invention is used for edible purposes, the size or the form is preferably adjusted to a level at which no influences of them can be perceived.

Specifically, the upper limit of d50 of fine particles obtained by further finely grinding the dried edible plant composition and subjecting a dispersion of the resulting dried powder to ultrasonication is preferably 2,000 µm or less, preferably 1,000 µm or less, above all preferably 500 µm or less, above all preferably 300 µm or less, and even more preferably 200 µm or less. The lower limit is not particularly limited, but it is only required to be 5 µm or more, from the viewpoint of handleability as a dry powder. The means for fine grinding treatment is not particularly limited. The temperature during fine grinding is also not limited and any of high-temperature grinding, normal-temperature grinding, and low-temperature grinding may be used. The pressure during fine grinding is also not limited and any of high-pressure grinding, normal-pressure grinding, and low-pressure grinding may be used. However, it is preferred to use a means which allows to treat the foodstuff and other components, which are materials of the composition, with high shear under pressure and elevated temperature conditions in a short time, from the viewpoint of effectively obtaining a dried edible plant powder. Examples of the apparatus for such a fine grinding treatment include instruments such as a blender, a mixer, a mill, a kneader, a grinder, a pulverizer, and an attritor, and any of which may be used. For the apparatus thereof, for example, a medium agitation mill such as a dry bead mill and a ball mill (such as tumbling and vibrating), a jet mill, a high-speed rotation impact mill (such as a pin mill), a roll mill, a hammer mill, and the like can be used.

The particle size d50 of the dried powder is defined as the particle size at which, when the particle size distribution of the dried powder is divided into two from a certain particle size, the ratio of the proportion of the cumulative value of the % particle frequency on the large side to the proportion of the cumulative value of the % particle frequency on the small side is 50:50. The particle size d50 of the dried powder can be measured, for example, using a laser diffraction particle size distribution measuring apparatus described below. As used herein, the "particle size" represents particle sizes all measured on the volumetric basis, unless otherwise specified.

The measurement conditions of d50 of fine particles in the dispersion of the dried powder of the present invention are not limited, but the following conditions can be used. First, the solvent for the measurement may be any solvent as long as it is less likely to affect the structure of the dried powder of the dried edible plant. For example, ethanol is preferably used. The laser diffraction particle size distribution measuring apparatus used for the measurement is not limited, but for example, the Microtrac MT3300 EX2 system of MicrotracBEL Corp. can be used. The measurement application software is not limited, but for example, the DMS2 (Data Management System version 2, MicrotracBEL Corp.) can be used. When the aforementioned measuring apparatus and software are used, it is only required for the measurement to press the cleaning button of the software to conduct cleaning, followed by pressing the Set zero button of the software to conduct zero adjustments, and directly charging the sample until the concentration becomes within an appropriate range by sample loading. For the sample before agitation, that is, the sample not to be subjected to ultrasonication, the sample concentration is adjusted within the appropriate range in two times of sample loading after charging the sample, and immediately after the adjustment, a laser diffraction measurement is performed at a flow velocity of 60% and at a measurement time of 10 seconds, and then it is only required to determine the result as a measurement value. On the other hand, when the sample after agitation, that is, the sample having been subjected to ultrasonication is measured, the sample having been subjected to ultrasonication in advance may be charged, or ultrasonication may be performed using the aforementioned measuring apparatus after charging the sample, and subsequently, the measurement may be performed. In the latter case, after the sample not being subjected to ultrasonication is charged into the apparatus and the concentration is adjusted within the appropriate range by sample loading, the ultrasonication button of the software is pressed to perform ultrasonication. Thereafter, a degassing treatment is performed three times and the sample loading process is performed again. After it is confirmed that the concentration is still within the appropriate range, a laser diffraction measurement at a flow velocity of 60% and at a measurement time of 10 seconds is performed and the result can be determined as a measurement value. The parameter for the measurement is, for example, distribution display: volume, refractive index of particle: 1.60, refractive index of solvent: 1.36, measuring upper limit (µm) = 2,000.00 µm, and measuring lower limit (µm) = 0.021 µm.

When d50 of the dried powder in the present invention is determined, it is preferred that the particle size distribution for each channel (CH) be measured at first and then the particle size for each channel described in Table 2 below be used as the standard. Specifically, the % particle frequency for each channel (also referred to as "the % particle frequency of channel **") can be determined by measuring the frequency of particles whose particle size is not more than the particle size defined for each channel in Table 2 below and larger than the particle size defined for the channel having one higher number (in the largest channel within the measuring range, a particle size at the measuring lower limit) for each channel in Table 2 below, and using the total frequency of all channels within the measuring range as a denominator. For example, the % particle frequency of channel 1 represents the % frequency of particles having a particle size of 2,000.00 µm or less and larger than 1,826.00 µm.

**[Table 2]**

| Channel | Particle diameter (µm) | Channel | Particle diameter (µm) | Channel | Particle diameter (µm) | Channel | Particle diameter (µm) |
|---|---|---|---|---|---|---|---|
| 1 | 2,000.000 | 37 | 88.000 | 73 | 3.889 | 109 | 0.172 |
| 2 | 1,826.000 | 38 | 80.700 | 74 | 3.566 | 110 | 0.158 |
| 3 | 1,674.000 | 39 | 74.000 | 75 | 3.270 | 111 | 0.145 |
| 4 | 1,535.000 | 40 | 67.860 | 76 | 2.999 | 112 | 0.133 |
| 5 | 1,408.000 | 41 | 62.230 | 77 | 2.750 | 113 | 0.122 |
| 6 | 1,291.000 | 42 | 57.060 | 78 | 2.522 | 114 | 0.111 |
| 7 | 1,184.000 | 43 | 52.330 | 79 | 2.312 | 115 | 0.102 |
| 8 | 1,086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

### EXAMPLES

In this example, the present invention will be described in further detail with reference to Examples, but these Examples are illustrative only for the purpose of the explanation, and the present invention is not limited to these Examples in any way.

### [Example 1] Verification of the effect on the drying efficiency of an edible plant due to the mixing of a non-edible part and verification of the effect due to the difference in drying methods

In this example, sweetcorn was selected as a representative example of the edible plant, and the influence on the drying efficiency due to the mixing effect of the non-edible part, the mixing proportion, and the difference in drying systems between forced-air drying and dry-heat drying (a method for heating in a dry air without continuously blowing air directly to the material to be dried or without moving the material to be dried) was verified.

The seed, which is the edible part of sweetcorn, and the cob (the core excluding seeds), pistil, and bract which are the non-edible part were separated and each of them was crushed by a mincer (meat chopper MS-12B, manufactured by NANTSUNE Co, Ltd.) in a raw state. The edible part and the non-edible part crushed were thoroughly mixed so that the proportion of the non-edible part could be the proportions shown in Table 3 and crushed materials of the edible part and crushed materials of the non-edible part could be homogeneous. The moisture content of the mixture was measured by a reduced-pressure heat-drying method as the moisture content before drying treatment.

Next, 5 g of each mixture was weighed and spread on a commercially available paper plate so as to have a thickness of about 5 mm. These plates were allowed to stand on a shelf of a forced-air dryer (Electric Dehydrator DSK-10 manufactured by Shizuoka Seiki Co., Ltd.) which is a box-type shelf dryer, and a thermostat dryer (dry-heat type, WFO-520 manufactured by TOKYO RIKAKIKAI CO, LTD), and subjected to a drying treatment at the ambient temperature shown in Table 3 until the moisture content reached 5%. During the drying treatment, the weight of the dried material was appropriately measured over time and the moisture content was determined from the decrease in the weight. Furthermore, an approximate curve was determined from the change over time of the moisture content, and from the equation thereof, the time until the moisture content reaches 20% by mass (min) was determined.

Furthermore, the quality (taste, fragrance, color tone, and overall evaluation) of the dried edible plant dried until the moisture content reached 5% by mass was evaluated as follows.

The evaluation criteria of the quality are as follows.

### <Evaluation criteria 1: taste>

5: The same as before drying, sufficiently has the characteristic and fresh taste which is inherent in the edible plant, and excellent.
4: Almost the same as before drying, has the characteristic and fresh taste which is inherent in the edible plant, and slightly excellent.
3: Slightly lack in fresh taste as compared with the taste before drying, but the characteristic and fresh taste which is inherent in the edible plant exists, and within the acceptable range.
2: Lack in fresh taste as compared with the taste before drying, a slight change is observed in the characteristic and fresh taste which is inherent in the edible plant, and slightly poor.
1: Lack in fresh taste as compared with the taste before drying, the characteristic and fresh taste which is inherent in the edible plant is lost, and poor.

### <Evaluation criteria 2: fragrance>

5: The old stink seemed to be due to the drying treatment is not imparted, sufficiently has the characteristic and fresh fragrance which is inherent in the edible plant, and excellent.
4: The old stink seemed to be due to the drying treatment is almost not imparted, has the characteristic and fresh fragrance which is inherent in the edible plant, and slightly excellent.
3: A hay-like, characteristic old stink seemed to be due to the drying treatment is slightly perceived, has the characteristic and fresh fragrance which is inherent in the edible plant, and within the acceptable range.
2: A hay-like, old stink seemed to be due to the drying treatment is imparted, slightly lack in the characteristic and fresh fragrance which is inherent in the edible plant, and slightly poor.
1: A hay-like, old stink seemed to be due to the drying treatment is strongly imparted, lack in characteristic and fresh fragrance which is inherent in the edible plant, and poor.

### <Evaluation criteria 3: color tone>

5: Sufficiently has natural-looking color same as before drying, and excellent.
4: Has natural-looking color almost the same as before drying, and slightly excellent.
3: Has slightly dull color as compared with the color before drying, but has natural-looking color, and within the acceptable range.
2: Has dull color as compared with the color before drying, slightly lack in natural-looking color, and slightly poor.
1: Has dull color as compared with the color before drying, natural-looking color is lost, and poor.

### <Evaluation criteria 4: overall evaluation>

5: General flavor, intensity of color tone, and balance are excellent.
4: General flavor, intensity of color tone, and balance are slightly excellent.
3: General flavor, intensity of color tone, and balance are within the acceptable range.
2: General flavor, intensity of color tone, and balance are slightly poor.
1: General flavor, intensity of color tone, and balance are poor.

Training of the following A) to C) were conducted for sensory test panelists, and panelists who have particularly excellent results in the training, product development experience, and a wide variety of knowledge about the quality such as the taste and texture of food products, and can perform an absolute evaluation on each sensory evaluation item, were selected.
A) Quality of taste discrimination test in which, for five basic tastes (sweet: taste of sugar, sour: taste of tartaric acid, umami: taste of sodium glutamate, salty: taste of sodium chloride, bitter: taste of caffeine), one aqueous solution having a concentration close to the threshold of each component is prepared for respective components and two distilled water are added to make a total of seven samples, and from which the sample of each taste is accurately discriminated.
B) Concentration discrimination test in which concentration differences in five kinds of saline solutions and acetic acid aqueous solutions each having slightly different concentrations are accurately discriminated.
C) Three-item discrimination test in which, two soy sauces from manufacturer A and one soy sauce from manufacturer B are provided and among a total of three samples, the soy sauce from B is accurately discriminated.

For every evaluation item as mentioned above, the evaluation of the standard sample was performed by all panelists in advance and the evaluation criteria for each score were standardized, and then the objective sensory test was performed by a total of ten panelists. The evaluation of each evaluation item was evaluated by a method, in which each panelist selected any one number closest to the evaluation by the panelist from the 5-point scale for each item. The evaluation results were summarized by calculating the arithmetic mean value from the scores of a total of ten panelists. Furthermore, the standard deviation was calculated to evaluate variations among panelists.

The results are shown in Table 3.

**[Table 3]**

| | Edible plant | Dried part | Proportion of the non-edible part to the total mass of the edible part and the non-edible part (% by mass) in the dried state | Drying method (ambient temperature in cabinet) | Elapsed time after initiation of drying and moisture content (% by mass) | | | | | | Time until the moisture content reaches 20% by mass (min) | Sensory evaluation | | | |
|---|---|---|---|---|---|---|---|---|---|---|---|---|---|---|---|
| | | | | | 0 min | 30 min | 60 min | 90 min | 120 min | 300 min | | Taste | Fragrance | Color tone | Overall evaluation |
| Comparative Example 1 | Corn | Edible part (seed) only | 0 | Forced-air drying (70°C) | 81% | 69% | 49% | 11% | 5% | - | 75 | 2 | 2 | 3 | 2 |
| Comparative Example 2 | Corn | Edible part (seed) + non-edible part (cob, pistil, bract) | 1 | Forced-air drying (70°C) | 81% | 64% | 42% | 10% | 5% | - | 72 | 2 | 2 | 4 | 2 |
| Test Example 1 | Corn | Edible part (seed) + non-edible part (cob, pistil, bract) | 3 | Forced-air drying (70°C) | 80% | 47% | 18% | 8% | 5% | - | 48 | 5 | 5 | 5 | 5 |
| Test Example 2 | Corn | Edible part (seed) + non-edible part (cob, pistil, bract) | 10 | Forced-air drying (70°C) | 80% | 44% | 12% | 7% | 5% | - | 45 | 5 | 5 | 5 | 5 |
| Test Example 3 | Corn | Edible part (seed) + non-edible part (cob, pistil, bract) | 20 | Forced-air drying (70°C) | 79% | 42% | 9% | 5% | - | - | 40 | 5 | 5 | 5 | 5 |
| Test Example 4 | Corn | Edible part (seed) + non-edible part (cob, pistil, bract) *the entire ear portion | 50 | Forced-air drying (70°C) | 76% | 33% | 8% | 5% | - | - | 35 | 5 | 5 | 5 | 5 |
| Test Example 5 | Corn | Edible part (seed) + non-edible part (cob, pistil, bract) | 60 | Forced-air drying (70°C) | 75% | 25% | 7% | 5% | - | - | 32 | 5 | 4 | 5 | 4 |
| Test Example 6 | Corn | Edible part (seed) + non-edible part (cob, pistil, bract) | 70 | Forced-air drying (70°C) | 74% | 20% | 7% | 5% | - | - | 30 | 4 | 3 | 5 | 4 |
| Comparative Example 3 | Corn | Edible part (seed) + non-edible part (cob, pistil, bract) | 80 | Forced-air drying (70°C) | 74% | 18% | 7% | 5% | - | - | 25 | 2 | 2 | 5 | 2 |
| Comparative Example 4 | Corn | Edible part (seed) only | 0 | Dry-heat drying (70°C) | 80% | 75% | 70% | 64% | 64% | 5% | 270 | 1 | 1 | 1 | 1 |
| Comparative Example 5 | Corn | Edible part (seed) + non-edible part (cob, pistil, bract) | 1 | Dry-heat drying (70°C) | 78% | 71% | 65% | 59% | 59% | 5% | 240 | 1 | 1 | 1 | 1 |
| Comparative Example 6 | Corn | Edible part (seed) + non-edible part (cob, pistil, bract) | 20 | Dry-heat drying (70°C)) | 76% | 71% | 65% | 56% | 56% | 5% | 240 | 1 | 1 | 1 | 1 |
| Comparative Example 7 | Corn | Edible part (seed) + non-edible part (cob, pistil, bract) *the entire ear portion | 50 | Dry-heat drying (70°C) | 73% | 66% | 59% | 50% | 50% | 5% | 220 | 1 | 1 | 1 | 1 |
| Comparative Example 8 | Corn | Edible part (seed) + non-edible part (cob, pistil, bract) | 90 | Dry-heat drying (70°C) | 71% | 62% | 54% | 44% | 44% | 5% | 200 | 1 | 1 | 1 | 1 |

As a result, it was confirmed that the drying speed becomes higher, the time until the moisture content reaches 20% by mass is shortened, and the drying efficiency is improved in the forced-air drying treatment by mixing the non-edible part into the edible part within a range of certain proportion or more. However, it was found that, when the proportion of the non-edible part is too high, unpleasant drying smell (old stink and pulp smell) seemed to be due to the drying of the non-edible part is perceived and this affects the evaluation of the taste and fragrance. Accordingly, the lower limit of the proportion range of the non-edible part based on the total mass of the edible part and the non-edible part in the dried state is only required to be 3% by mass or more from the viewpoint of sufficiently exerting the effect of improving the drying efficiency; and the upper limit is only required to be 70% by mass or less from the viewpoint of preferred quality, but above all preferably 60% by mass or less, and even more preferably 50% by mass or less. However, it was considered that the preferred range would vary somewhat depending on the kind of plant, in terms of feeding performance or flavor.

Also, in the dry-heat drying, a tendency of increase in the drying speed was recognized by mixing the non-edible part into the edible part, but in the first place, the drying time in the dry-heat drying was significantly longer as compared with that in the forced-air drying, and no effect of improving the drying efficiency with a preferred quality could be recognized.

### [Example 2] Verification of presence or absence of effects of various edible plants and various drying treatment temperatures

In this example, edible plants other than the sweetcorn of Example 1 shown in Table 4 were verified regarding the presence or absence of the effect of improving the drying efficiency at various drying temperatures. Unlike Example 1, only the edible part excluding the non-edible part and the entire edible plant in which the non-edible part remained as it was were used in this example for respective edible plants. The mixing proportion of the non-edible part at this time was as listed in Table 4.

With regard to the crushing of the edible plant, each of only the edible part and the entire edible plant comprising the non-edible part was crushed by a mincer (meat chopper MS-12B, manufactured by NANTSUNE Co, Ltd.) in a raw state.

The forced-air drying treatment, whose effect of improving the drying efficiency with the preferred quality was recognized in Example 1, was performed as the drying treatment. Other methods and evaluations were conducted in the same manner as Example 1.

The results are shown in Table 4.

**[Table 4]**

| | Edible plant | Dried part | Proportion of the non-edible part to the total mass of the edible part and the non-edible part (% by mass) in the dried state | Drying method (ambient temperature in cabinet) | Elapsed time after initiation of drying and moisture content (% by mass) | | | | | | Time until the moisture content reaches 20% by mass (min) | Sensory evaluation | | | |
|---|---|---|---|---|---|---|---|---|---|---|---|---|---|---|---|
| | | | | | 0 min | 30 min | 60 min | 90 min | 120 min | 300 min | | Taste | Fragrance | Color tone | Overall evaluation |
| Comparative Example 9 | Pumpkin | Edible part (pulp) only | 0 | Forced-air drying (80°C) | 70% | 37% | 15% | 7% | 5% | - | 55 | 2 | 2 | 2 | 2 |
| Test Example 7 | Pumpkin | Edible part (pulp) + non-edible part (seeds, pith, skin, both ends) *the entire fruit | 9 | Forced-air drying (80°C) | 81% | 30% | 5% | - | - | - | 40 | 4 | 3 | 5 | 4 |
| Comparative Example 10 | Green soybea n | Edible part (bean) only | 0 | Forced-air drying (20°C) | 74% | 62% | 53% | 32% | 5% | - | 95 | 2 | 2 | 3 | 2 |
| Test Example 8 | Green soybea n | Edible part (bean) + non-edible part (pod) *the entire fruit | 45 | Forced-air drying (20°C) | 82% | 58% | 37% | 10% | 5% | - | 75 | 4 | 4 | 5 | 4 |
| Comparative Example 11 | Green soybea n | Edible part (bean) only | 0 | Forced-air drying (30°C) | 74% | 50% | 42% | 13% | 5% | - | 80 | 2 | 2 | 3 | 2 |
| Test Example 9 | Green soybea n | Edible part (bean) + non-edible part (pod) *the entire fruit | 45 | Forced-air drying (30°C) | 82% | 49% | 27% | 5% | - | - | 65 | 5 | 5 | 5 | 5 |
| Comparative Example 12 | Paprika | Edible part (pulp) only | 0 | Forced-air drying (60°C) | 93% | 84% | 77% | 18% | 5% | - | 75 | 2 | 2 | 3 | 2 |
| Test Example 10 | Paprika | Edible part (pulp) + non-edible part (stem end, core, seeds) *the entire fruit | 10 | Forced-air drying (60°C) | 94% | 78% | 18% | 5% | - | - | 55 | 5 | 5 | 5 | 5 |
| Comparative Example 13 | Paprika | Edible part (pulp) only | 0 | Forced-air drying (70°C) | 93% | 81% | 62% | 18% | 5% | - | 65 | 2 | 2 | 3 | 2 |
| Test Example 11 | Paprika | Edible part (pulp) + non-edible part (stem end, core, seeds) *the entire fruit | 10 | Forced-air drying (70°C) | 94% | 65% | 14% | 5% | - | - | 47 | 5 | 4 | 5 | 5 |

As a result, when the proportion of the non-edible part to the edible part is within a range of certain proportion, the effect of improving the drying efficiency with quality was recognized regardless of the difference in drying temperature in any of the foodstuffs of pumpkin, green soybean, and paprika. That is, it was found that the lower limit of the temperature range of the forced-air drying treatment is only required to be 20°C or more, and above all preferably 30°C or more from the viewpoint of increasing the drying efficiency. On the other hand, the upper limit is only required to be 80°C or less, and above all preferably 70°C or less, and even more preferably 60°C or less from the viewpoint of preferred quality.

### [Example 3] Validation of a method for further improving the drying efficiency

In this example, a method for enhancing the effect of improving the drying efficiency of the edible plant of the present invention recognized in Examples 1 and 2.

The test was performed in the same manner as Example 1 except that, although the material to be dried was directly placed on a paper plate during the drying treatment in Example 1, a commercially available heat-resistant plastic mesh (the mesh size of 5 mm × 5 mm and the thickness of 1 mm) was mounted on a paper plate in this example, in order to improve the breathability of the bottom surface and spread the material to be dried thereon so as to have a thickness of about 5 mm.

The results are shown in Table 5.

**[Table 5]**

| | Edible plant | Dried part | Proportion of the non-edible part to the total mass of the edible part and the non-edible part (% by mass) in the dried state | Drying method (ambient temperature in cabinet) | Elapsed time after initiation of drying and moisture content (% by mass) | | | | | | Time until the moisture content reaches 20% by mass (min) | Sensory evaluation | | | |
|---|---|---|---|---|---|---|---|---|---|---|---|---|---|---|---|
| | | | | | 0 min | 30 min | 60 min | 90 min | 120 min | 300 min | | Taste | Fragrance | Color tone | Overall evaluation |
| Comparative Example 14 | Corn | Edible part (seed) only | 0 | Forced-air drying (70°C) | 80% | 58% | 29% | 10% | 5% | - | 75 | 2 | 2 | 3 | 2 |
| Test Example 12 | Corn | Edible part (seed) + non-edible part (cob, pistil, bract) | 3 | Forced-air drying (70°C) | 79% | 40% | 12% | 5% | - | - | 40 | 5 | 5 | 5 | 5 |
| Test Example 13 | Corn | Edible part (seed) + non-edible part (cob, pistil, bract) | 20 | Forced-air drying (70°C) | 79% | 32% | 9% | 5% | - | - | 35 | 5 | 5 | 5 | 5 |
| Test Example 14 | Corn | Edible part (seed) + non-edible part (cob, pistil, bract) *the entire ear portion | 50 | Forced-air drying (70°C) | 77% | 20% | 8% | 5% | - | - | 30 | 5 | 5 | 5 | 5 |
| Test Example 15 | Corn | Edible part (seed) + non-edible part (cob, pistil, bract) | 70 | Forced-air drying (70°C) | 74% | 8% | 8% | 5% | - | - | 20 | 5 | 5 | 5 | 5 |

As a result, although the drying efficiency in the case of only the edible part was almost the same as compared with the results of Example 1 (see Table 3), but it was recognized in the case comprising the non-edible part that the drying speed becomes higher, the time until the moisture content reaches 20% by mass is shortened, and the drying efficiency is improved. The flavor and the color tone of the material to be dried were improved by mixing the non-edible part into the drying treatment of only the edible part, like Example 1.

### [Example 4] Verification of presence or absence of effects of various edible plants and various drying treatment temperatures

In this example, the effect of interposing a mesh on the underside of the material to be dried confirmed in Example 3 was verified whether this effect is exerted for various edible plants and at various drying treatment temperatures as in Example 2. The test was performed in the same manner as Example 2 except that a commercially available heat-resistant plastic mesh (the mesh size of 5 mm × 5 mm and the thickness of 1 mm) was mounted on a paper plate and spread the material to be dried thereon so as to have a thickness of about 5 mm as in Example 3.

The results are shown in Table 6.

**[Table 6]**

| | Edible plant | Dried part | Proportion of the non-edible part to the total mass of the edible part and the non-edible part (% by mass) in the dried state | Drying method (ambient temperature in cabinet) | Elapsed time after initiation of drying and moisture content (% by mass) | | | | | | Time until the moisture content reaches 20% by mass (min) | Sensory evaluation | | | |
|---|---|---|---|---|---|---|---|---|---|---|---|---|---|---|---|
| | | | | | 0 min | 30 min | 60 min | 90 min | 120 min | 300 min | | Taste | Fragrance | Color tone | Overall evaluation |
| Comparative Example 15 | Pumpkin | Edible part (pulp) only | 0 | Forced-air drying (80°C) | 73% | 37% | 13% | 8% | 5% | - | 50 | 2 | 2 | 2 | 2 |
| Test Example 16 | Pumpkin | Edible part (pulp) + non-edible part (seeds, pith, skin, and both ends) *the entire fruit | 9 | Forced-air drying (80°C) | 74% | 20% | 5% | - | - | - | 30 | 5 | 4 | 5 | 5 |
| Comparative Example 16 | Green soybean | Edible part (bean) only | 0 | Forced-air drying (20°C) | 75% | 60% | 49% | 20% | 5% | - | 90 | 2 | 2 | 3 | 2 |
| Test Example 17 | Green soybean | Edible part (bean) + non-edible part (pod) *the entire fruit | 45 | Forced-air drying (20°C) | 80% | 40% | 25% | 5% | - | - | 65 | 5 | 5 | 5 | 5 |
| Comparative Example 17 | Paprika | Edible part (pulp) only | 0 | Forced-air drying (60°C) | 93% | 81% | 46% | 12% | 5% | - | 70 | 2 | 2 | 3 | 2 |
| Test Example 18 | Paprika | Edible part (pulp) + non-edible part (stem end, core, seeds) *the entire fruit | 10 | Forced-air drying (60°C) | 94% | 70% | 12% | 5% | - | - | 45 | 5 | 5 | 5 | 5 |

As a result, it was recognized that, when a heat-resistant plastic mesh was interposed between the material to be dried and a plate placed, the drying efficiency in the case of only the edible part was almost the same regardless of the difference in the kind of edible plant and the forced-air drying temperature, but in the case comprising the non-edible part, the drying speed becomes higher, the time until the moisture content reaches 20% by mass is shortened, and the drying efficiency is improved, as compared with the results of Example 2 (see Table 4). Also, the flavor and the color tone of the material to be dried were improved when the non-edible part was mixed, as compared with the results of Example 2 (see Table 4).

### [Example 5] Verification of presence or absence of the effect of the present invention due to the difference in crushing aspect

In Examples 1 to 4, as the material to be dried, one having been subjected to a crushing treatment by a mincer was used. In this example, it was verified whether the effect of the present invention can be achieved even when the materials to be dried crushed by different aspects are used.

Green soybean was selected as the material to be dried, and crushing of green soybean was performed for each of only the edible part and the entire green soybean comprising the non-edible part (in a state where beans are in pods) by cutting into squares of 1 cm width (cutting into dices) with a knife. Furthermore, the case where green soybean was sliced in a vertical direction (horizontally to the longitudinal direction) to have a size of about half (1.5 cm width) was also verified. These aspects of cutting and slices are significantly bulky as compared with the treatment by a mincer in Examples 1 to 4. The test was performed in the same manner as in Example 2.

The results are shown in Table 7.

**[Table 7]**

| | Edible plant | Dried part | Proportion of the non-edible part to the total mass of the edible part and the non-edible part (% by mass) in the dried state | Crushing aspect | Drying method (ambient temperature in cabinet) | Elapsed time after initiation of drying and moisture content (% by mass) | | | | | | Time until the moisture content reaches 20% by mass (min) | Sensory evaluation | | | |
|---|---|---|---|---|---|---|---|---|---|---|---|---|---|---|---|---|
| | | | | | | 0 min | 30 min | 60 min | 90 min | 120 min | 300 min | | Taste | Fragrance | Color tone | Overall evaluation |
| Comparative Example 18 | Green soybean | Edible part (bean) only | 0 | Minced form | Forced-air drying (40°C) | 74% | 50% | 42% | 13% | 5% | - | 75 | 2 | 2 | 2 | 2 |
| Test Example 19 | Green soybean | Edible part (bean) + non-edible part (pod) *the entire fruit | 45 | Minced form | Forced-air drying (40°C) | 82% | 49% | 18% | 5% | - | - | 55 | 5 | 5 | 5 | 5 |
| Test Example 20 | Green soybean | Edible part (bean) + non-edible part (pod) *the entire fruit | 45 | Diced form | Forced-air drying (40°C) | 82% | 50% | 20% | 5% | - | - | 60 | 5 | 5 | 5 | 5 |
| Test Example 21 | Green soybean | Edible part (bean) + non-edible part (pod) *the entire fruit | 45 | Sliced form | Forced-air drying (40°C) | 82% | 52% | 31% | 8% | 5% | - | 65 | 4 | 4 | 5 | 4 |

As a result, it was found that, when a different crushing aspect is used, the effect of the present invention can be exerted. That is, the drying speed becomes higher, the time until the moisture content reaches 20% by mass is shortened, and drying efficiency is increased in the case comprising the non-edible part as compared with only the edible part, and the flavor and the color tone of the material to be dried were increased by mixing the non-edible part as compared with the drying treatment of only the edible part. Thus, it was considered that the effect of the present invention can be exerted regardless of the crushing aspect. However, the effect of the present invention was more strongly exerted in the diced form than the sliced form, and in the minced form than the diced form. It was found that, when a crushing aspect such as diced form or sliced form is used, the separation between the edible part and the non-edible part after the drying treatment is easy and can be exploited as a method for improving the drying efficiency with quality of the edible part.

### [Example 6] Verification of the influence of the particle size of the dried edible plant on the texture

Regarding the texture of the dried edible plant obtained by the present invention, the relationship between the texture and the particle size thereof was verified. The reason is that the dried edible plant of the present invention has high versatility in a state of powder in view of its utilization. On the other hand, the reason is that the dried edible plant of the present invention comprises a hard dietary fiber layer derived from the non-edible part of the edible plant and thus the range of the particle size suitable for this utilization is to be examined.

The dried edible plants of the present invention having the moisture content of 5% by mass of Test Example 10 prepared in Example 2 were used and prepared to have each d50 shown in Table 8 using a mill (Wonder Crusher WC-3, purchased from OSAKA CHEMICAL Co., Ltd.), and evaluation was made for each texture in accordance with the following evaluation criteria.

### <Evaluation criteria 5: texture>

5: No discomfort is sensed at the time of eating, and excellent.
4: Almost no discomfort is sensed at the time of eating, and slightly excellent.
3: Slightly fibrous roughness is perceived at the time of eating, and within the acceptable range.
2: Slightly fibrous roughness is found at the time of eating, and slightly poor.
1: Fibrous roughness is significant at the time of eating, and poor.

The results are shown in Table 8.

**[Table 8]**

| Evaluation object | Edible plant | Dried part | Proportion of the non-edible part to the total mass of the edible part and the non-edible part (% by mass) in the dried state | Drying method (ambient temperature in cabinet) | Sensory evaluation (texture) | | | | | | | |
|---|---|---|---|---|---|---|---|---|---|---|---|---|
| | | | | | Particle size (d50) of a finely divided material of a dry-treated material having a moisture content of 5% by mass | | | | | | | |
| | | | | | Test Example 22 | Test Example 23 | Test Example 24 | Test Example 25 | Test Example 26 | Test Example 27 | Test Example 28 | Test Example 29 |
| | | | | | 5 µm | 10 µm | 50 µm | 200 µm | 300 µm | 500 µm | 1,000 µm | 2,000 µm |
| Preparation in Test Example 9 | Green soybean | Edible part (bean) + non-edible part (pod) *the entire fruit | 45 | Forced-air drying (30°C) | 5 | 5 | 5 | 5 | 4 | 4 | 4 | 3 |

As a result, it was found that in the dried edible plant comprising the non-edible part, when the particle size is large, hard roughness or scratchy texture due to the trichome tends to be slightly easily perceived.

Therefore, it was found that the upper limit of d50 after ultrasonication when the dried edible plant of the present invention was prepared as a powder is preferably 2,000 µm or less, even more preferably 1,000 µm or less, even more preferably 500 µm or less, and above all, more preferably 300 µm or less, and furthermore, even more preferably 200 µm or less. On the other hand, the lower limit is not particularly limited, but it was considered that the lower limit is preferably 5 µm or more from the viewpoint of handling as a dry powder. In addition, when dried edible plant powders of Test Examples were respectively added to food and beverage (cow milk) in an amount of 10% by mass, all the food and beverage had a quality in which a characteristic and fresh flavor or color tone which are inherent in the food product can be perceived.

The range of the present particle size merely illustrates a preferred range when these textures are raised as a problem to be improved, and if these textures do not cause an issue, it will be appreciated that the range is not limited at all.

### INDUSTRIAL APPLICABILITY

The method for producing a dried edible plant composition, the method for drying, and dried edible plant composition according to the present invention are expected to be applied mainly in the fields of food product in terms of the effect of improving the drying efficiency described above, and the effect of improving flavor or color tone accompanying therewith.

## Claims

1. A method for producing a dried edible plant composition,
the dried edible plant composition comprising a non-edible part of an edible plant, in a dried state, in an amount of 3% by mass or more and 70% by mass or less based on the total mass of an edible part and the non-edible part,
the method comprising:
a step of crushing and mixing the edible part and the non-edible part; and
a step of drying until a moisture content reaches 20% by mass or less by forced-air drying at a temperature of 20°C or more and 80°C or less.

2. The method for producing a dried edible plant composition according to claim 1, wherein any one of a conveyor type dryer, a flat dryer, or a box-type shelf dryer is used in the forced-air drying.

3. The method for producing a dried edible plant composition according to claim 1 or 2, wherein the edible plant is placed on a mesh.

4. The method for producing a dried edible plant composition according to any one of claims 1 to 3, wherein a crushing aspect of the edible part and the non-edible part of the edible plant is one or more selected from the group consisting of cutting into dices, chopped form, and minced form.

5. The method for producing a dried edible plant composition according to any one of claims 1 to 4, wherein the edible part and the non-edible part of the edible plant are derived from the same kind of edible plant.

6. The method for producing a dried edible plant composition according to any one of claims 1 to 5, wherein the edible part and the non-edible part of the edible plant are derived from the same individual edible plant.

7. The method for producing a dried edible plant composition according to any one of claims 1 to 6, wherein the edible plant is one or more selected from the group consisting of cereals, potatoes, beans, nuts and seeds, vegetables, fruits, and mushrooms.

8. The method for producing a dried edible plant composition according to any one of claims 1 to 7, wherein the edible plant is one or more selected from the group consisting of paprika, table beet, soybean, corn, carrot, pumpkin, pea, broad bean, sweet potato, broccoli, spinach, kale, and tomato.

9. The method for producing a dried edible plant composition according to any one of claims 1 to 8, wherein the non-edible part of the edible plant is one or more selected from the group consisting of stem end, core or seed of paprika; root tip, skin or petiole of beet; pod of soybean (green soybean); bract, pistil or cob of corn; root tip or petiole base of carrot; pith or seed or both ends of pumpkin; pod of pea; seed skin or pod of broad bean; surface skin and both ends of sweet potato; leaf and stem of broccoli; plant foot of spinach; petiole base of kale; and stem end of tomato.

10. The method for producing a dried edible plant composition according to any one of claims 1 to 9, wherein the dried edible plant composition consists only of the edible part of a plant and the non-edible part of a plant.

11. The method according to any one of claims 1 to 10, wherein the dried edible plant composition is for human ingestion application.

12. A method for drying an edible plant,
the edible plant comprising a non-edible part of the edible plant, in a dried state, in an amount of 3% by mass or more and 70% by mass or less based on the total mass of an edible part and the non-edible part,
the method comprising:
crushing and mixing the edible part and the non-edible part; and
drying until a moisture content reaches 20% by mass or less by forced-air drying at a temperature of 20°C or more and 80°C or less.

13. A dried edible plant composition, wherein
the dried edible plant composition comprises a non-edible part of an edible plant, in a dried state where the non-edible part is forced-air-dried at a temperature of 20°C or more and 80°C or less, in an amount of 3% by mass or more and 70% by mass or less based on the total mass of an edible part and the non-edible part, and
a moisture content is 20% by mass or less.

14. The dried edible plant composition according to claim 13, wherein the dried edible plant composition is a powder of the dried edible plant, and d50 after ultrasonication is 5 µm or more and 2,000 µm or less.

15. The composition according to claim 13 or 14, wherein the dried edible plant composition is for human ingestion application.

16. A food and beverage comprising the dried edible plant composition according to any one of claims 13 to 15.
